# EUROPEAN PATENT APPLICATION

(11) **EP 4 818 272 A1**
(43) Date of publication of application: **07.10.2026**
(21) Application number: 26168599.4
(22) Date of filing: 27.03.2026
(51) Int. Cl.: C09D 11/102, C09D 11/12, C09D 11/38, C09D 11/40, C09D 11/52, C09D 11/322, D06P 5/30

(54) **AQUEOUS INK FOR INKJET RECORDING, INK SET, INKJET RECORDING DEVICE, AND IMAGE FORMING METHOD**

(30) Priority: 31.03.2025 JP 2025059428; 06.03.2026 JP 2026035985
(71) Applicant: BROTHER KOGYO KABUSHIKI KAISHA, Aichi-ken 467-8561 (JP)
(72) Inventor: ISAKA, Yuta, Nagoya, 467-8562 (JP); TAGA, Yasuhiro, Nagoya, 467-8562 (JP); HIGUCHI, Takayuki, Nagoya, 467-8562 (JP); ITO, Shinpei, Nagoya, 467-8562 (JP); KAWAKAMI, Takefumi, Nagoya, 467-8562 (JP); NISHIKAWA, Aoi, Nagoya, 467-8562 (JP); MIYAGAWA, Nanako, Nagoya, 467-8562 (JP); OTANI, Hana, Nagoya, 467-8562 (JP)
(74) Representative: Kuhnen & Wacker Patent- und Rechtsanwaltsbüro PartG mbB

(57) **Abstract**

An aqueous ink for inkjet recording used to form an image on a fabric, includes a pigment, a binder, a crosslinking agent, and a wax particle. The binder contains a urethane resin. The crosslinking agent contains a blocked isocyanate compound. A melting point of the wax particle is 90 °C or higher and 140 °C or lower.

## Description

### TECHNICAL FIELD

The present specification discloses a technology relating to aqueous ink for inkjet recording, an ink set, an inkjet recording apparatus, and an image forming method. In particular, the present specification discloses a technology concerning aqueous inks suitable for fabric printing on a fabric.

### BACKGROUND

Patent Literature 1 discloses an aqueous ink for inkjet recording used for fabric printing. This aqueous ink includes a pigment, a water-dispersible resin, and a crosslinking agent.

### PATENT LITERATURE

Patent Literature 1: JP2019-031611A

### SUMMARY

The present specification provides a technology for achieving high rubbing fastness.

The aqueous ink for inkjet recording disclosed herein is used to form images on a fabric. The aqueous ink includes a pigment, a binder, a crosslinking agent, and a wax particle. The binder includes a urethane resin. The crosslinking agent includes a blocked isocyanate compound. A melting point of the wax particle is 90 °C or higher and 140 °C or lower.

In the above-described aqueous ink, since a part of the wax particles present in the resin coating film is distributed so as to cover the surface of the resin coating film, it is considered that the rubbing fastness of the resin coating film can be improved. On the other hand, during the heat treatment for forming the resin coating film, if the wax particles melt, there is a possibility that the crosslinking reaction between binders by the crosslinking agent may be inhibited. However, the melting point of the wax particles is 90 °C or higher and 140 °C or lower, which is relatively high. Therefore, during the heat treatment for forming the resin coating film, the timing at which the wax particles start melting can be delayed. Accordingly, in the above aqueous ink, the wax particles start melting after the crosslinking reaction has progressed to some extent. As a result, inhibition of the crosslinking reaction by the wax particles is suppressed, and a decrease in the strength of the coating film is prevented. Consequently, high rubbing fastness can be achieved.

The ink set is also novel and useful. This ink set includes the aforementioned aqueous ink for inkjet recording and a pretreatment liquid. The pretreatment liquid is applied to a fabric before forming an image on the fabric using the aqueous ink for inkjet recording.

An inkjet recording apparatus is also novel and useful. The inkjet recording apparatus includes an ink storage section, an ink ejection section, and the aqueous ink for inkjet recording stored in the ink storage section. The inkjet recording apparatus ejects the aqueous ink for inkjet recording from the ink ejection section to form an image on the fabric. The aqueous ink includes a pigment, a binder, a crosslinking agent, and a wax particle. The binder includes a urethane resin. The crosslinking agent includes a blocked isocyanate compound. A melting point of the wax particle is 90 °C or higher and 140 °C or lower.

An image forming method for forming an image on a fabric by an inkjet recording method is also novel and useful. The image forming method includes an image forming step, and a drying step. In the image forming step, an image is formed on the fabric using the aqueous ink. In the drying step, the fabric having the formed image is heated to dry the aqueous ink. The aqueous ink includes a pigment, a binder, a crosslinking agent, and a wax particle. The binder includes a urethane resin. The crosslinking agent includes a blocked isocyanate compound. A melting point of the wax particle is 90 °C or higher and 140 °C or lower.

### BRIEF DESCRIPTION OF DRAWINGS

FIG. 1 illustrates a configuration of an inkjet recording apparatus.
FIG. 2 illustrates a schematic configuration of an ejection head mounted on a carriage.
FIG. 3 illustrates an example of a configuration in which a pretreatment liquid is applied prior to image formation by the inkjet recording apparatus.
FIG. 4 illustrates TABLE 1 of the present disclosure.
FIG. 5 illustrates TABLE 2 of the present disclosure.
FIG. 6 illustrates TABLE 3 of the present disclosure.

### DETAIL DESCRIPTION

(Aqueous Ink for Inkjet Recording) An embodiment of aqueous ink for inkjet recording disclosed in this specification will be described. Hereinafter, the aqueous ink for inkjet recording may simply be referred to as aqueous ink. The aqueous ink is used to form an image on a fabric. Examples of the fabric may include those made of fiber materials, such as woven fabrics, non-woven fabrics, and knitted fabrics. Examples of the fiber materials may include natural fibers and synthetic fibers. Examples of natural fibers may include cotton, linen, wool, and silk. Examples of synthetic fibers include rayon, vinylon, nylon, acrylic, polyurethane, polyester, and acetate. The fabric may also be a blended woven fabric or blended non-woven fabric made from two or more selected from the above-mentioned fiber materials. The aqueous ink includes a pigment, a binder, a crosslinking agent, and a wax particle.

The pigment is not particularly limited. Examples of the pigment may include carbon black, inorganic pigments, and organic pigments. Examples of carbon black may include furnace black, lamp black, acetylene black, and channel black. Examples of inorganic pigments may include titanium oxide, iron oxide-based inorganic pigments, and carbon black-based inorganic pigments. Examples of organic pigments may include azo pigments such as azo lakes, insoluble azo pigments, condensed azo pigments, and chelate azo pigments; polycyclic pigments such as phthalocyanine pigments, perylene and perinone pigments, anthraquinone pigments, quinacridone pigments, dioxazine pigments, thioindigo pigments, isoindolinone pigments, and quinophthalone pigments; dye lake pigments such as basic dye-type lake pigments and acid dye-type lake pigments; nitro pigments; nitroso pigments; aniline black daylight fluorescent pigments. Other pigments may also be used as long as they are dispersible in an aqueous phase. Specific examples of these pigments may include C.I. Pigment Black 1, 6, and 7; C.I. Pigment Yellow 1, 2, 3, 12, 13, 14, 15, 16, 17, 55, 74, 78, 150, 151, 154, 155, 180, 185, and 194; C.I. Pigment Orange 31 and 43; C.I. Pigment Red 2, 3, 5, 6, 7, 12, 15, 16, 48, 48:1, 53:1, 57, 57:1, 112, 122, 123, 139, 144, 146, 149, 150, 166, 168, 175, 176, 177, 178, 184, 185, 190, 202, 209, 221, 222, 224, and 238; C.I. Pigment Violet 19 and 196; C.I. Pigment Blue 1, 2, 3, 15, 15:1, 15:2, 15:3, 15:4, 16, 22, and 60; C.I. Pigment Green 7 and 36; and solid solutions of these pigments. The aqueous ink may include a pigment dispersed in water using a dispersant. Examples of the dispersant may include general polymer dispersants, which may be prepared inhouse. Examples of the polymer dispersants may include pigment-dispersing resins and resin dispersants. In the aqueous ink, the pigment may also be encapsulated by a polymer.

Examples of a method for dispersing a pigment using a pigment-dispersing resin may include dispersing the pigment with a dispersing device. The dispersing device used for pigment dispersion is not particularly limited. Examples of the dispersing device may include general dispersing device such as a ball mill, a roll mill, and a sand mill.

The pigment may be a self-dispersing pigment. The self-dispersing pigment may be one that can be dispersed in water without using a dispersant, as hydrophilic functional groups such as carbonyl groups, hydroxyl groups, carboxylic acid groups, sulfonic acid groups, phosphate groups, and at least one of their salts are introduced into the pigment particles either directly or via another group through chemical bonding.

The pigment may be used alone or in combination with two or more types. Pigment solid amount, i.e., the solid amount of the pigment relative to the total amount of the aqueous ink, is not particularly limited and can be determined as appropriate based on the desired optical density or chroma. The range of the pigment solid amount may be 0.10 wt% or greater and 20.00 wt% or less, 0.50 wt% or greater and 15.00 wt% or less, 1.00 wt% or greater and 10.00 wt% or less, or 2.00 wt% or greater and 8.00 wt% or less. The pigment solid amount refers to the weight of the pigment only and does not include the weight of resin dispersants and other components. In other words, the pigment solid amount is calculated based on the effective ingredient amount.

(Binder) The binder is blended to improve the fixation of the pigment on the fabric and the rubbing fastness, by forming a resin coating film on the fabric. The binder may be blended in the form of an emulsion in the aqueous ink and may be dispersed in the form of resin particles in the aqueous ink. The binder includes a urethane resin. The urethane resin may be anionic, nonionic, or cationic.

A urethane resin is a resin having urethane bonds in its molecular structure. The urethane bonds may be present in the main chain or in the side chains. Examples of urethane resins may include polyester-based polyurethane resins, polyether-based polyurethane resins, polyether-ester-based polyurethane resins, and polycarbonate-based polyurethane resins. The polyurethane resin may be obtained by reacting a polyisocyanate component with one or more polyol components selected from polyester-based, polylactone-based, polycarbonate-based, and polyether-polycarbonate-based polyols, optionally along with a chain extender and a chain terminator, in the presence of a urethanization catalyst, using a known method.

The polyisocyanate is a compound or derivative having two or more isocyanate groups. Examples of polyisocyanates may include diisocyanates and triisocyanates. The polyisocyanate may be one or more selected from aliphatic polyisocyanates, cycloaliphatic polyisocyanates, aromatic polyisocyanates, aromatic-aliphatic polyisocyanates, and aromatic-cycloaliphatic polyisocyanates. The polyisocyanate may have isocyanate groups protected with blocking agents. Examples of polyisocyanate derivatives may include polymeric products and modified products such as adducts, carbodiimide-modified products, allophanate-modified products, uretdione-modified products, isocyanurate-modified products, biuret-modified products, uretonimine-modified products, dimers, trimers, pentamers, and heptamers.

Examples of polyols may include aromatic polyols, aliphatic polyols, and cycloalipatic polyols. The polyol may be either a saturated or unsaturated polyol. The polyol only needs to have two or more hydroxyl groups, and examples may include diols and triols.

Commercially available products may be used as the urethane resin. Examples of such commercial products may include TAKELAC^{®} W-5030, TAKELAC W-5130 (glass transition temperature (Tg): 26 °C), TAKELAC W-5661, TAKELAC W-6010, TAKELAC W-6020, TAKELAC W-6061 (Tg: -20 °C), TAKELAC W-6110 (Tg: 25 °C), and TAKELAC W-6021 from Mitsui Chemicals, Inc.; SUPERFLEX^{®} 126, SUPERFLEX 150 (Tg: 40 °C), SUPERFLEX 150HS (Tg: 32 °C), SUPERFLEX 170 (Tg: 75 °C), SUPERFLEX 210 (Tg: - 41 °C), SUPERFLEX 300 (Tg: -42 °C), SUPERFLEX 500M (Tg: -39 °C), SUPERFLEX 620 (Tg: 43 °C), SUPERFLEX 740 (Tg: -34 °C), SUPERFLEX 820 (Tg: 46 °C), SUPERFLEX 830HS (Tg: 68 °C), SUPERFLEX 860 (Tg: 36 °C), and SUPERFLEX E-2000 (Tg: -38 °C) from by DKS Co. Ltd.; Impranil^{®} DLP-R, Impranil DLN-W50, and Impranil DLP1380 from Sumika Covestro Urethane Company, Ltd. These binders may be used alone or in combination of two or more.

An amount of the binder in the total amount of the aqueous ink is not particularly limited. The lower limit of the binder amount, on a solids basis, may be 1.00 wt% or greater, 2.00 wt% or greater, 2.50 wt% or greater, 3.00 wt% or greater, or 3.50 wt% or greater. The upper limit of the binder amount, on a solids basis, may be 15.00 wt% or less, 10.00 wt% or less, 9.00 wt% or less, 8.00 wt% or less, or 7.00 wt% or less. A range of the binder amount may be set by appropriately combining the above lower and upper limits. For example, a range of the binder amount may be 1.00 wt% or greater and 15.00 wt% or less, 2.00 wt% or greater and 10.00 wt% or less, 2.50 wt% or greater and 9.00 wt% or less, 3.00 wt% or greater and 8.00 wt% or less, or 3.50 wt% or greater and 7.00 wt% or less, on a solids basis. When the binder amount falls within the above range, the pigment can be suitably fixed to the fabric, and a resin coating film with high rubbing fastness can be ensured.

The glass transition temperature of the urethane resin is not particularly limited. The lower limit of the glass transition temperature may be -50 °C or higher, -45 °C or higher, -40 °C or higher, or -35 °C or higher. The upper limit of the glass transition temperature may be 80 °C or lower, 60 °C or lower, 40 °C or lower, or 30 °C or lower. A range of the glass transition temperature may be set by appropriately combining the above lower and upper limits. For example, a range of the glass transition temperature may be -50 °C or higher and 80 °C or lower, -45 °C or higher and 60 °C or lower, -40 °C or higher and 40 °C or lower, or -35 °C or higher and 30 °C or lower,

The aqueous ink may contain, as a binder, in addition to a urethane resin, other water-dispersible resins. Examples of water-dispersible resins may include acrylic resins, polycarbonate resins, styrene-based resins, and polyester resins.

The crosslinking agent is incorporated to impart crosslinking properties to the binder. The crosslinking agent includes a blocked isocyanate compound. The blocked isocyanate compound is obtained by inactivating active isocyanate groups in the polyisocyanate compound through reaction with a blocking agent. Blocked isocyanate compounds are chemically stable and incapable of undergoing crosslinking reactions. Therefore, inks containing blocked isocyanate compounds can exhibit high storage stability. Upon heating treatment to the blocked isocyanate compound, the blocking agent dissociates from the isocyanate group, thereby generating the active isocyanate group and enabling crosslinking reactions. The blocked isocyanate compound may be anionic, nonionic, or cationic.

Examples of compounds constituting the polyisocyanate portion of the blocked isocyanate compound may include polyisocyanate compounds or their derivatives that have two or more isocyanate groups per molecule. Specific examples of compounds constituting the polyisocyanate portion of the blocked isocyanate compound may include various polyisocyanate compounds, such as diisocyanate compounds, triisocyanate compounds, tetra isocyanate compounds, penta isocyanate compounds, and hexa isocyanate compounds. Examples of polyisocyanate compounds may include one or more selected from aliphatic polyisocyanate compounds, cycloaliphatic polyisocyanate compounds, aromatic polyisocyanate compounds, aromatic-aliphatic polyisocyanate compounds, and aromatic-cycloaliphatic polyisocyanate compounds. Examples of derivatives of compounds constituting the polyisocyanate portion of the blocked isocyanate compound may include oligomers such as dimers and trimers of the compounds constituting the polyisocyanate portion of the blocked isocyanate compound, isocyanurates, allophanates, and biurets.

Examples of aliphatic polyisocyanate compound may include one or more selected from ethylene diisocyanate, trimethylene diisocyanate, tetramethylene diisocyanate, pentamethylene diisocyanate, 1,6-hexamethylene diisocyanate (HDI), ethylethylene diisocyanate, heptamethylene diisocyanate, dodecamethylene diisocyanate, 1,6,11-undecane triisocyanate, 2,2,4-trimethylhexamethylene diisocyanate, 2,4,4-trimethylhexamethylene diisocyanate, lysine diisocyanate (2,6-diisocyanatomethylcaproate), bis(2-isocyanatoethyl) fumarate, bis(2-isocyanatoethyl) carbonate, and 2-isocyanatoethyl-2,6-diisocyanatohexanoate.

Examples of cycloaliphatic polyisocyanate compound may include one or more selected from isophorone diisocyanate (IPDI), 4,4'-dicyclohexylmethane diisocyanate (hydrogenated MDI), hydrogenated xylylene diisocyanate, hydrogenated toluene diisocyanate, cyclobutane diisocyanate, cyclopentane diisocyanate, 1,4-cyclohexane diisocyanate, 1,3-cyclohexane diisocyanate, methylcyclohexylene diisocyanate, bis(2-isocyanatoethyl)-4-cyclohexene-1,2-dicarboxylate, 2,5-norbornane diisocyanate, 2,6-norbornane diisocyanate, and 2-heptyl-3,4-bis(9-isocyanatononyl)-1-pentyl-cyclohexane.

Examples of aromatic polyisocyanate compound may include one or more selected from 2,4-toluene diisocyanate, 2,6-toluene diisocyanate, 4,4'-diphenylmethane diisocyanate, p-phenylenediisocyanate, m-phenylenediisocyanate, 1,5-naphthylenediisocyanate, 3,3'-dimethyldiphenyl-4,4'-diisocyanate, dianisidine diisocyanate, 4,4'-toluidine diisocyanate, 4,4'-diphenyl ether diisocyanate, triphenylmethane triisocyanate, 1,3,5-triisocyanatobenzene, 2,4,6-triisocyanatotoluene, dimethyl triphenylmethane tetra isocyanate, polymethylene polyphenyl polyisocyanate (crude MDI, polymetric MDI), and crude toluene diisocyanate (crude TDI).

Examples of aromatic-aliphatic polyisocyanate compound may include one or more selected from 1,3-xylylene diisocyanate, 1,4-xylylene diisocyanate, and tetramethylxylylene diisocyanate.

The blocking agents may include one or more selected from phenol, cresol, ethylphenol, butylphenol, 2-hydroxypyridine, dimethyl malonate, diethyl malonate, methyl acetoacetate, ethyl acetoacetate, acetylacetone, butyl mercaptan, dodecyl mercaptan, acetoanilide, acetamide, ε-caprolactam, δ-valerolactam, γ-butyrolactam, succinimide, maleimide, imidazole, 2-methylimidazole, urea, thiourea, ethyleneurea, formaldehyde oxime, acetaldehyde oxime, acetone oxime, methyl ethyl ketoxime, methyl isobutyl ketoxime, cyclohexanone oxime, carbazole, dimethylpyrazole, and triazole.

The dissociation temperature (Td) of the blocked isocyanate compound is not particularly limited. The lower limit of the dissociation temperature may be 60 °C or higher, 80 °C or higher, 100 °C or higher, 110 °C or higher, or 120 °C or higher. The upper limit the dissociation temperature may be 200 °C or lower, 180 °C or lower, 160 °C or lower, 140 °C or lower, or 130 °C or lower. The range of the dissociation temperature may be set by appropriately combining the above lower and upper limits. For example, the range of the dissociation temperature may be 80 °C or higher and 160 °C or lower, 90 °C or higher and 150 °C or lower, 90 °C or higher and 150 °C or lower, 90 °C or higher and 150 °C or lower, or 100 °C or higher and 140 °C or lower. If the dissociation temperature of the blocked isocyanate compound is equal to or lower than the above upper limit, the blocking agent can suitably dissociate by heat treatment, thereby allowing the crosslinking reaction to proceed. In addition, if the dissociation temperature of the blocked isocyanate compound is equal to or higher than the above lower limit, the storage stability of the aqueous ink can be improved. From the perspective of initiating the crosslinking reaction after the binder initiates forming the resin coating film, it is preferable that the dissociation temperature be higher than the above glass transition temperature of the urethane resin.

Commercially available blocked isocyanate compounds may be used. Examples may include TRIXENE^{®} Aqua BI 210 (Td: 120 °C) and TRIXENE Aqua BI 220 (Td: 120 °C) from Baxenden Chemicals; DM-6400 (Td: 130 °C), MEIKANATE^{™} DM-3031CONC (Td: 180 °C), MEIKANATE DM-350Z (Td: 180 °C), MEIKANATE TP-10 (Td: 130 °C), MEIKANATE CX (Td: 120 °C), SU-268A (Td: 120 °C), NBP-873D (Td: 160 °C), NBP-211 (Td: 160 °C), and SU-315V (Td: 100 °C) from by Meisei Chemical Works, Ltd.; and ELASTRON^{™} BN-69 (Td: 120 °C), ELASTRON BN-77 (Td: 120 °C), and ELASTRON BN-27 (Td: 180 °C) from DKS Co. Ltd. From the perspective of reactivity in the crosslinking reaction, hexamethylene diisocyanate (HDI) may be preferred as the compound constituting the polyisocyanate portion of the blocked isocyanate compound. Specifically, SU-268A, SU-315V, or NBP-211 may be particularly preferred as blocked isocyanate compounds.

The aforementioned crosslinking agents may be used alone or in combination with two or more types. The amount of the crosslinking agents is appropriately adjusted according to the amount of the binder. A ratio of the crosslinking agent amount to the binder amount is not particularly limited. The lower limit of the ratio, on a solids basis, may be 0.01 or greater, 0.05 or greater, 0.10 or greater, 0.15 or greater, or 0.20 or greater. The upper limit of the ratio, on a solids basis, may be 0.70 or less, 0.60 or less, 0.50 or less, 0.45 or less, or 0.40 or less. The range of the ratio may be set by appropriately combining the above-mentioned lower and upper limits. For example, the ratio, on a solids basis, may be 0.01 or greater and 0.70 or less, 0.05 or greater and 0.60 or less, 0.10 or greater and 0.50 or less, 0.15 or greater and 0.45 or less, or 0.20 or greater and 0.40 or less, on a solids basis.

The crosslinking agent amount relative to the total amount of the aqueous ink is not particularly limited. The lower limit of the crosslinking agent amount, on a solids basis, may be 0.30 wt% or greater, 0.50 wt% or greater, 0.60 wt% or greater, 0.80 wt% or greater, or 0.90 wt% or greater. The upper limit of the crosslinking agent may be 10.00 wt% or less, 5.00 wt% or less, 4.00 wt% or less, 3.00 wt% or less, or 2.00 wt% or less. The range of the crosslinking agent amount may be set by appropriately combining the above lower and upper limits. The range of the crosslinking agent amount may be, on a solids basis, 0.30 wt% or greater and 10.00 wt% or less, 0.50 wt% or greater and 5.00 wt% or less, 0.60 wt% or greater and 4.00 wt% or less, 0.80 wt% or greater and 3.00 wt% or less, or 0.90 wt% or greater and 2.00 wt% or less.

The aqueous ink may include, in addition to blocked isocyanate compounds, other crosslinking agents. Examples of such other crosslinking agents may include oxazoline group-containing compounds, carbodiimide group-containing compounds, aziridine group-containing compounds, epoxy group-containing compounds, and water-based crosslinking agents obtained by imparting hydrophilic segments to polycarbodiimide resins.

(Wax Particles) Wax particles are incorporated to enhance the color development of the aqueous ink and to improve the rubbing fastness of the resin coating film. The wax particles contain wax. The wax may be either natural wax or synthetic wax. The wax particles may also contain components other than wax. However, from the perspective of improving rubbing fastness, it may be preferable that an amount of the wax in the wax particles is 80.00 wt% or greater and 100 wt% or less. More preferably, the wax particles may consist entirely of wax.

Examples of natural waxes may include petroleum-based waxes such as paraffin wax and microcrystalline wax; lignite-based waxes such as montan wax; plant-based waxes such as carnauba wax and candelilla wax; and animal-based or plant-based waxes such as beeswax and lanolin. Examples of synthetic waxes may include polyethylene wax, polypropylene wax, oxidized polyethylene wax, polyalkylene wax, and oxidized polyalkylene wax. Among these, synthetic wax may be preferred, and polyethylene wax, oxidized polyethylene wax and paraffin wax may be particularly preferred. The wax particles may be in the form of a wax emulsion. A wax emulsion typically consists of wax particles and a dispersion medium, wherein the wax particles are dispersed with a specific particle size rather than being dissolved in the dispersion medium.

Commercially available waxes may be used. Examples may include CERAFLOUR^{®} 925 (melting point (mp): 115 °C), CERAFLOUR 929 (mp: 115 °C), CERAFLOUR 950 (mp: 135 °C), CERAFLOUR 991 (mp: 115 °C), AQUACER^{®} 507 (mp: 130 °C), AQUACER 526 (mp: 105 °C), AQUACER 537 (mp: 110 °C), AQUACER 1547 (mp: 125 °C), AQUACER 515 (mp: 130 °C), AQUACER 539 (mp: 90 °C), AQUAMAT^{®} 208 (mp: 135 °C), AQUAMAT 263 (mp: 130 °C), AQUAMAT 272 (mp: 125 °C), and MINEPOL^{®} 221 (mp: 120 °C) from BYK-Chemie; CHEMIPEARL^{®} W100 (mp: 123 °C), CHEMIPEARL W200 (mp: 108 °C), CHEMIPEARL W300 (mp: 127 °C), CHEMIPEARL W400 (mp: 108 °C), CHEMIPEARL W500 (mp: 109 °C), CHEMIPEARL W700 (mp: 127 °C), CHEMIPEARL W800 (mp: 126 °C), and CHEMIPEARL W900 (mp: 125 °C) from Mitsui Chemicals, Inc.; and HITECH E-7100S (mp: 140 °C), HITECH E-8237 (mp: 106 °C), HITECH E-6314 (mp: 137 °C), HITECH E-6700 (mp: 140 °C), and HITECH E-8010 (mp: 140 °C) from Toho Chemical Industry Co., Ltd. Among these, oxidized high-density polyethylene wax and paraffin wax may be preferred. Specific examples may include AQUACER 1547 and AQUACER 537.

From the perspective of suppressing inhibition of the crosslinking reaction caused by melting of the wax particles, wax particles having a melting point (mp) of 90 °C or higher and 140 °C or lower may be used. The lower limit of the melting point may be 90 °C or higher, 100 °C or higher, 110 °C or higher, 120 °C or higher, 130 °C or higher, or 135 °C or higher. The upper limit of the melting point may be 140 °C or lower, 139 °C or lower, or 138 °C or lower. The range of the melting point may be appropriately set by combining the above-mentioned lower and upper limits. The range of the melting point may be 90 °C or higher and 140 °C or lower, 100 °C or higher and 139 °C or lower, 110 °C or higher and 138 °C or lower, 120 °C or higher and 140 °C or lower, 130 °C or higher and 140 °C or lower, or 135 °C or higher and 140 °C or lower. If the melting point of the wax particles is equal to or lower than the above upper limit, the dry rubbing fastness and wet rubbing fastness can be improved. In addition, if the melting point of the wax particles is equal to or higher than the above lower limit, it may be easier to adjust the relationship between the melting point of the wax particles and the glass transition temperature of the binder. From the perspective of suppressing inhibition of the crosslinking reaction by the wax particles, the melting point of the wax particles may be 5 °C or higher than the dissociation temperature of the blocked isocyanate compound. Furthermore, from the viewpoint of further suppressing inhibition of the crosslinking reaction by the wax particles, the melting point of the wax particles may be 15 °C or higher than the dissociation temperature of the blocked isocyanate compound.

The wax particles may be used alone or in combination of two or more types. An amount of the wax particles relative to the total amount of the aqueous ink is not particularly limited. The lower limit of the wax particle amount, on a solids basis, may be 0.10 wt% or greater, 0.20 wt% or greater, 0.30 wt% or greater, 0.40 wt% or greater, or 0.50 wt% or greater. The upper limit of the wax particle amount, on a solids basis, may be 5.00 wt% or less, 3.00 wt% or less, 2.00 wt% or less, 1.50 wt% or less, or 1.00 wt% or less. The range of the wax particle amount may be set by appropriately combining the above upper and lower limits. For example, the range of the wax particle amount content, on a solids basis, may be 0.10 wt% or greater and 5.00 wt% or less, 0.20 and 3.00 wt% or less, 0.30 wt% or greater and 2.00 wt% or less, 0.40 wt% or greater and 1.50 wt% or less, or 0.50 wt% or greater and 1.00 wt% or less. When the amount of the wax particles is within the above range, the smoothness of the resin coating film surface can be improved, and the dry rubbing fastness can be enhanced.

(Other Components) The aqueous ink may further include other components such as water, water-soluble organic solvents, and surfactants.

(Water) Water may preferably be ion-exchanged water or purified water. An amount of water relative to the total amount of the aqueous ink may be appropriately determined according to the desired ink properties. The range of the water amount may be 15.00 wt% or greater and 95.00 wt% or less, 35.00 wt% or greater and 85.00 wt% or less, or 50.00 wt% or greater and 80.00 wt% or less. The water amount may also be regarded as the remainder of other components.

(Water-Soluble Organic Solvent) Examples of water-soluble organic solvents may include humectants and penetrants.

The humectant is not particularly limited. Examples of the humectant may include lower alcohols such as methyl alcohol, ethyl alcohol, n-propyl alcohol, isopropyl alcohol, n-butyl alcohol, sec-butyl alcohol, and tert-butyl alcohol; amides such as dimethylformamide and dimethylacetamide; ketones such as acetone; ketoalcohols such as diacetone alcohol; ethers such as tetrahydrofuran and dioxane; polyethers such as polyalkylene glycols; polyhydric alcohols such as alkylene glycols, glycerin, trimethylolpropane, and trimethylolethane; 2-pyrrolidone; N-methyl-2-pyrrolidone; 1,3-dimethyl-2-imidazolidinone; and the like. Examples of polyalkylene glycols may include polyethylene glycol and polypropylene glycol. Examples of alkylene glycols may include ethylene glycol, propylene glycol, butylene glycol, diethylene glycol, triethylene glycol, dipropylene glycol, tripropylene glycol, thioglycol, and hexylene glycol. These humectants may be used alone or in combination of two or more types. Among these, glycerin and polyethylene glycol may be preferred.

The humectant may be used alone or in combination of two or more types. When the aqueous ink contains a humectant, an amount of the humectant relative to the total amount of the aqueous ink is not particularly limited. The range of the humectant amount may be 1.00 wt% or greater and 95.00 wt% or less, 5.00 wt% or greater and 80.00 wt% or less, or 10.00 wt% or greater and 50.00 wt% or less. The humectant amount within the above range may prevent the aqueous ink from drying during storage and improve the storage stability of the aqueous ink.

Examples of penetrants may include glycol ethers. Specific examples of glycol ethers include ethylene glycol methyl ether, ethylene glycol ethyl ether, ethylene glycol-n-propyl ether, diethylene glycol methyl ether, diethylene glycol ethyl ether, diethylene glycol-n-propyl ether, diethylene glycol-n-butyl ether, diethylene glycol-n-hexyl ether, triethylene glycol methyl ether, triethylene glycol ethyl ether, triethylene glycol-n-propyl ether, triethylene glycol-n-butyl ether, propylene glycol methyl ether, propylene glycol ethyl ether, propylene glycol-n-propyl ether, propylene glycol-n-butyl ether, dipropylene glycol methyl ether, dipropylene glycol ethyl ether, dipropylene glycol-n-propyl ether, dipropylene glycol-n-butyl ether, tripropylene glycol methyl ether, tripropylene glycol ethyl ether, tripropylene glycol-n-propyl ether, and tripropylene glycol-n-butyl ether. Among these, triethylene glycol-n-butyl ether may be preferred.

The penetrant may be used alone or in combination of two or more types. When the aqueous ink contains a penetrant, an amount of the penetrant relative to the total amount of the aqueous ink is not particularly limited. The range of the penetrant amount may be 0.10 wt% or greater and 20.00 wt% or less, 0.50 wt% or greater and 10.00 wt% or less, or 1.00 wt% or greater and 5.00 wt% or less.

(Surfactants) The Surfactant is not particularly limited and may be appropriately selected according to the intended purpose. Examples of surfactants may include anionic surfactants, nonionic surfactants, cationic surfactants, amphoteric surfactants, silicone-based surfactants, and fluorine-based surfactants.

Examples of anionic surfactants may include alkylsulfocarboxylate salts, α-olefin sulfonate salts, polyoxyethylene alkyl ether acetate salts, polyoxyethylene alkyl ether sulfate salts, N-acyl amino acids or their salts, N-acylmethyltaurine salts, alkyl sulfate polyoxyalkyl ether sulfate salts, alkyl sulfate polyoxyethylene alkyl ether phosphate salts, rosin soap, castor oil sulfate ester salts, lauryl alcohol sulfate ester salts, alkylphenol-type phosphate esters, alkyltype phosphate esters, alkylaryl sulfonate salts, diethyl sulfosuccinate salts, diethylhexyl sulfosuccinate salts, and dioctyl sulfosuccinate salts.

Examples of nonionic surfactants may include polyols, glycol ethers, polyoxyethylene alkyl ethers, polyoxyethylene alkyl esters, polyoxyethylene sorbitan fatty acid esters, polyoxyethylene alkylphenyl ethers, polyoxyethylene alkylamines, polyoxyethylene alkylamides, and acetylene glycols. Commercially available nonionic surfactants may be used. Examples of commercially available products may include OLFINE^{®} E1004, OLFINE E1008, and OLFINE E1010 from Nisshin Chemical Industries Co., Ltd.; SURFYNOL^{®} 440, SURFYNOL 465, and SURFYNOL 485 from Air Products and Chemicals, Inc.; and Acetylenol^{™} E40 and Acetylenol E100 from Kawaken Fine Chemicals Co., Ltd.

Examples of silicone-based surfactants include polyether-modified siloxanes and polyether-modified polydimethylsiloxanes. Commercially available silicone-based surfactants may be used. Examples may include DYNOL^{™} 960 and DYNOL 980 from Air Products and Chemicals, Inc.; SILFACE^{®} SAG002, SILFACE SAG005, and SILFACE SAG503A from Nisshin Chemical Industries Co., Ltd.; BYK^{®}-345, BYK-347, BYK-348, BYK-349, BYK-3420, BYK-3455, BYK-3456, LP-X23288, LP-X23289, and LP-X23347 from BYK-Chemie; and TEGO^{®} Twin 4000 and TEGO Wet KL245 from Evonik Tego Chemie.

Examples of fluorine-based surfactants may include perfluoroalkyl sulfonic acid compounds, perfluoroalkyl carboxylic acid compounds, perfluoroalkyl phosphate ester compounds, perfluoroalkyl ethylene oxide adducts, and polyoxyalkylene ether polymer compounds having perfluoroalkyl ether groups as side chains.

The surfactant may be used alone or in combination of two or more types. When the aqueous ink contains a surfactant, an amount of the surfactant relative to the total amount of the aqueous ink is not particularly limited. The range of the surfactant amount may be 0.10 wt% or greater and 20.00 wt% or less, 0.15 wt% or greater and 10.00 wt% or less, or 0.20 wt% or greater and 5.00 wt% or less. When the surfactant amount falls within the above range, the aqueous ink may exhibit suitable surface-active properties.

The aqueous ink may further include, as needed, conventionally known additives. Examples of such additives may include pH adjusters, viscosity modifiers, and preservatives. Examples of viscosity modifiers may include polyvinyl alcohol, cellulose, and water-soluble resins.

The aqueous ink may be prepared by uniformly mixing the pigment, binder, crosslinking agent, wax particles, water, and other optional components using a conventionally known method, and then removing insoluble matter by filtration or similar method.

As described above, the aqueous ink contains solid components derived from various ingredients. The storage stability of the aqueous ink can be improved by properly setting the total amount of solid components of the binder, crosslinking agent and wax particles relative to the total amount of the aqueous ink. The ratio of the total amount of solid components to the total amount of the aqueous ink is not particularly limited. The lower limit of the total amount of solid components relative to the total amount of the aqueous ink may be 5.00 wt% or greater, 6.00 wt% or greater, 7.00 wt% or greater, or 7.20 wt% or greater. The upper limit of the total amount of solid components relative to the total amount of the aqueous ink may be 20.00 wt% or less, 15.00 wt% or less, 12.00 wt% or less, or 10.00 wt% or less. The range of the total amount of the solid components may be set by appropriately combining the above lower and upper limits. For example, the range may be 5.00 wt% or greater and 20.00 wt% or less, 6.00 wt% or greater and 15.00 wt% or less, 7.00 wt% or greater and 12.00 wt% or less, or 7.20 wt% or greater and 10.00 wt% or less.

(Ink Set) Next, the ink set disclosed in this specification will be described. The ink set includes the above-described aqueous ink for inkjet recording and a pretreatment liquid.

(Pretreatment Liquid) The pretreatment liquid is applied to the fabric before forming an image using the inkjet recording aqueous ink. The pretreatment liquid may suppress the penetration of the pigment contained in the aqueous ink into the fabric. The pretreatment liquid may include a coagulant.

(Coagulant) The coagulant is incorporated to suppress bleeding of the aqueous ink and to improve pigment fixation and color development by promoting coagulation of components contained in the aqueous ink. Examples of the coagulant may include organic acids, cationic compounds, and polyvalent metal salts.

Examples of organic acids may include monocarboxylic acids, such as formic acid, acetic acid, propionic acid, butyric acid, benzoic acid, glycolic acid, lactic acid, salicylic acid, pyrrolecarboxylic acid, furan carboxylic acid, picolinic acid, nicotinic acid, thiophene carboxylic acid, levulinic acid, and coumaric acid, and their salts; dicarboxylic acids, such as oxalic acid, malonic acid, succinic acid, glutaric acid, adipic acid, maleic acid, fumaric acid, itaconic acid, sebacic acid, phthalic acid, malic acid, and tartaric acid, and their salts or acid salts; tricarboxylic acids, such as citric acid and trimellitic acid, and their salts or acid salts; and tetracarboxylic acids, such as pyromellitic acid, and their salts or acid salts.

Examples of cationic compounds may include cationic resins and cationic surfactants.

Examples of cationic resins may include resins having primary, secondary, or tertiary amine structures, and resins having quaternary ammonium salt structures. Specific examples may include resins having structures such as vinylamine, allylamine, vinylimidazole, vinylpyridine, dimethylaminoethyl methacrylate, ethyleneimine, guanidine, diallyldimethylammonium chloride, and alkylamine-epichlorohydrin condensates.

Examples of cationic surfactants may include quaternary ammonium salts, quaternary ammonium ions, primary, secondary, and tertiary amine salt-type compounds, alkylamine salts, dialkylamine salts, aliphatic amine salts, alkylpyridinium salts, imidazolinium salts, sulfonium salts, phosphonium salts, and onium salts. Specific examples of cationic surfactants other than quaternary ammonium salts and quaternary ammonium ions may include hydrochloride salts or acetate salts, such as laurylamine, coconut amine, and rosin amine; cetylpyridinium chloride, cetylpyridinium bromide, and dihydroxyethyl laurylamine.

Examples of polyvalent metal salts include aluminum chloride, aluminum bromide, aluminum sulfate, aluminum nitrate, aluminum acetate, barium chloride, barium bromide, barium iodide, barium oxide, barium nitrate, barium thiocyanate, calcium chloride, calcium bromide, calcium iodide, calcium nitrite, calcium nitrate, calcium dihydrogen phosphate, calcium thiocyanate, calcium lactate, calcium fumarate, calcium citrate, copper chloride, copper bromide, copper sulfate, copper nitrate, copper acetate, iron chloride, iron bromide, iron iodide, iron sulfate, iron nitrate, iron oxalate, iron lactate, iron fumarate, iron citrate, magnesium chloride, magnesium bromide, magnesium iodide, magnesium sulfate, manganese sulfate, manganese nitrate, manganese dihydrogen phosphate, manganese acetate, manganese salicylate, manganese benzoate, manganese lactate, nickel chloride, nickel bromide, nickel sulfate, nickel nitrate, nickel acetate, tin sulfate, titanium chloride, zinc chloride, zinc bromide, zinc sulfate, zinc nitrate, zinc thiocyanate, and zinc acetate.

The coagulant may be used alone or in combination of two or more types. An amount of the coagulant relative to the total amount of the pretreatment liquid is not particularly limited. The range of the coagulant amount may be 0.50 wt% or greater and 20.00 wt% or less, 1.00 wt% or greater and 20.00 wt% or less, or 1.00 wt% or greater and 15.00 wt% or less.

The pretreatment liquid may further contain additives such as solvents, pH adjusters, and preservatives, as needed.

(Inkjet Recording Apparatus) Next, with reference to the drawings, an embodiment of an inkjet recording apparatus 10 will be described. Hereinafter, the inkjet recording apparatus 10 may be simply referred to as a recording apparatus 10. The recording apparatus 10 ejects the inkjet recording aqueous ink toward a fabric in accordance with an inkjet recording method, thereby forming an image on the fabric. In the present embodiment, the recording apparatus 10 performs fabric printing on the fabric using the inkjet recording method. The recording apparatus 10 is used while being placed on a tabletop. However, in other embodiments, the recording apparatus 10 may be placed on a floor or a rack.

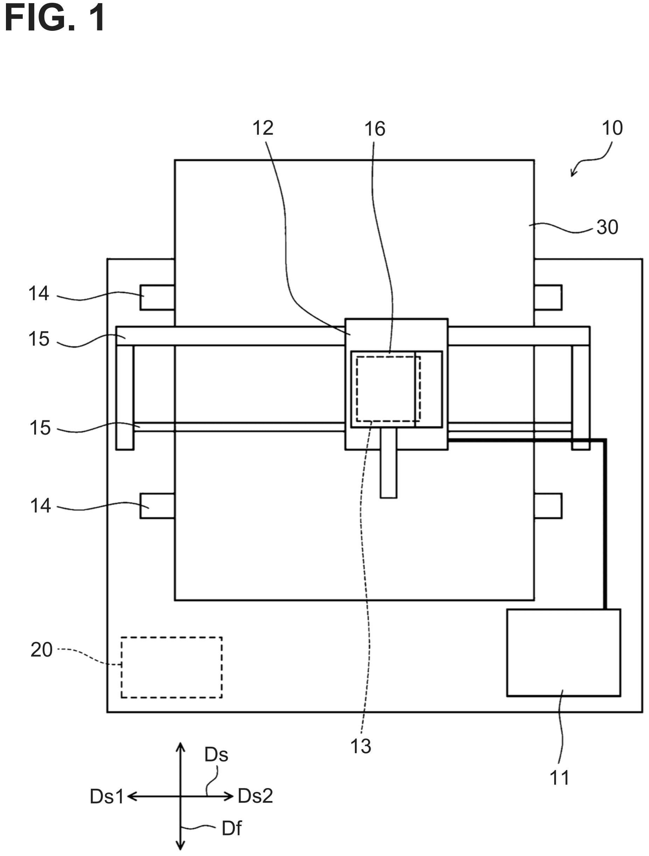

As shown in FIG. 1, the recording apparatus 10 includes a storage tank 11, a carriage 12, an ejection head 13, a pair of transport rollers 14, a pair of guide rails 15, sub-tanks 16, and a control unit 20. The control unit 20 is communicably connected to each component of the recording apparatus 10 and controls their operations. The control unit 20 is also communicably connected to a pretreatment liquid application device 22, which will be described later, and controls its operation. A fabric 30, which is the target for image formation, is placed on a platen of the recording apparatus 10.

The ejection head 13 is mounted on the carriage 12. The carriage 12 is supported by the pair of guide rails 15 and reciprocates along the guide rails 15 in a movement direction Ds. Accordingly, the ejection head 13 reciprocates in the movement direction Ds, which is perpendicular to the transport direction Df of the fabric.

The carriage 12 is equipped with multiple sub-tanks 16. Each sub-tank 16 is connected to a corresponding storage tank 11 via a tube for ink supply. In FIG. 1, the sub-tanks 16 are schematically illustrated as a single structural unit.

The pair of transport rollers 14 are arranged parallel to each other along the movement direction Ds. The transport rollers 14 rotate by driving a transport motor, thereby transporting the fabric 30 placed on the platen in the transport direction Df.

The storage tank 11 stores the aqueous ink. The storage tank 11 is connected to the ejection head 13 via a tube and a sub-tank 16. The storage tank 11 is provided for each type of aqueous ink. Although FIG. 1 schematically illustrates the storage tank 11 as a single structural unit, the recording apparatus 10 may include five storage tanks 11. These five storage tanks respectively store aqueous inks of white, black, yellow, cyan, and magenta colors.

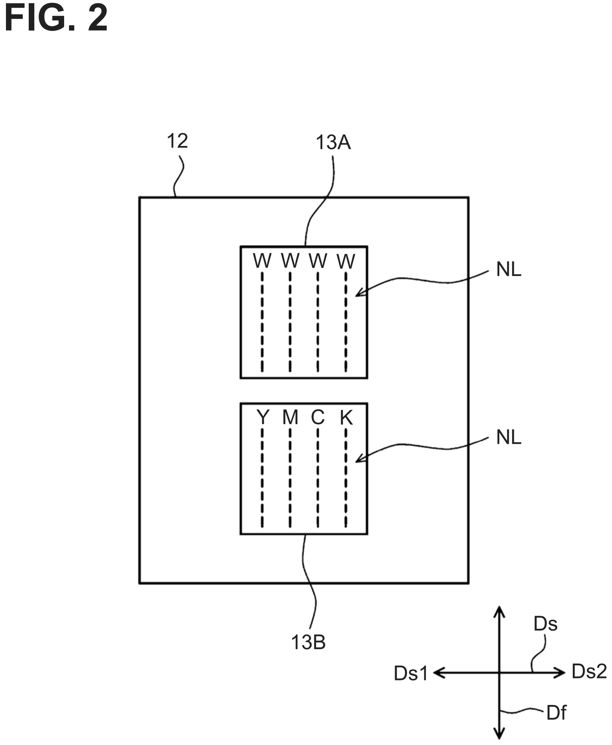

As shown in FIG. 2, the carriage 12 is equipped with two ejection heads 13A, 13B. The ejection heads 13A, 13B are arranged side by side along the transport direction Df. When recording an image on the fabric 30, the carriage 12 moves along the movement direction Ds, causing the ejection heads 13A, 13B to move together with the carriage 12. During this movement, the ejection heads 13A, 13B eject the aqueous ink onto the fabric 30, thereby forming an image on a recording surface of the fabric 30. The image recording process alternates between transporting the fabric 30 in the transport direction Df and ejecting aqueous ink while moving the ejection heads 13A, 13B.

The ejection head 13A ejects white ink. The ejection head 13A includes nozzle arrays NL for ejecting white ink, arranged along the transport direction Df. In the example shown in FIG. 2, the ejection head 13A includes four nozzle arrays NL for white ink, arranged at equal intervals along the movement direction Ds. The number of nozzle arrays NL for white ink is not particularly limited and may be two rows or even a single row.

The ejection head 13B ejects aqueous inks of yellow, magenta, cyan, and black. The ejection head 13B includes nozzle arrays NL for these inks such that each nozzle array is arranged along the transport direction Df. Each nozzle array NL is also arranged at equal intervals along the movement direction Ds.

In addition to the five storage tanks 11 for the above-mentioned ink colors, the recording apparatus 10 may further include an additional storage tank for a special color ink. In such a case, one of the nozzle arrays NL of the ejection head 13A may be used to eject the special color ink.

(Image Formation Method) Next, an image formation method using the inkjet recording method with the recording apparatus 10 will be described. The method includes a pretreatment step, a pretreatment liquid fixation step, an image formation step, and a drying step. The control unit 20 executes each step in response to a command input to the recording apparatus 10 from an external source. Upon receiving the command, the control unit 20 controls components, such as the pair of transport rollers 14, to transport the fabric 30.

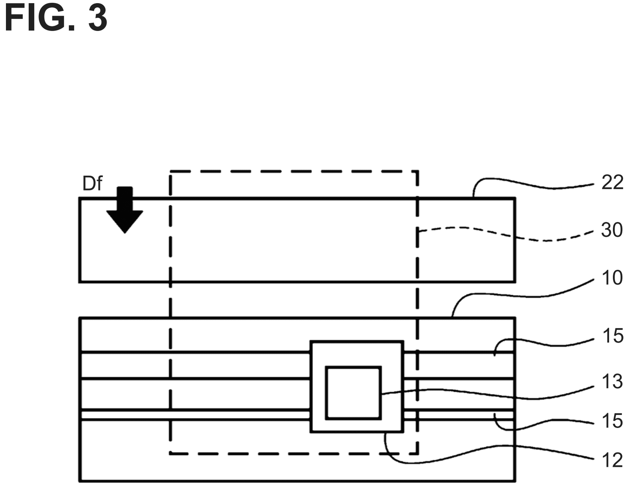

(Pretreatment Step) In the pretreatment step, the control unit 20 applies the pretreatment liquid to the recording surface of the fabric 30. This step is performed to suppress ink bleeding and improve pigment fixation and color development. The specific configuration for applying the pretreatment liquid to the fabric 30 is not particularly limited. For example, as shown in FIG. 3, the pretreatment liquid may be applied using a pretreatment liquid application device 22 that is separate from the recording apparatus 10. The control unit 20 controls the operation of the pretreatment liquid application device 22 to apply the pretreatment liquid to the recording surface of the fabric 30, as the fabric 30 passes through the pretreatment liquid application device 22.

The method of applying the pretreatment liquid to the fabric 30 is not particularly limited. Examples of application method may include spray coating, blade coating, roll coating, inkjet method, and immersion processing. Immersion processing refers to a method in which the fabric 30 is immersed in the pretreatment liquid and then squeezed using a mangle roll. From the viewpoint of continuous processing of pretreatment and image formation, inkjet application may be adopted.

In the pretreatment step, the pretreatment liquid is applied to an area of the fabric 30 where the image will be formed. The pretreatment liquid may be applied to the entire recording surface of the fabric 30 or only to a partial area including the image formation area. In the former case, spray coating, blade coating, roll coating, or immersion processing may be suitably used. In the latter case, inkjet application may be preferably used.

The recording apparatus 10 may also possess the functionality of the pretreatment liquid application device 22. That is, the recording apparatus 10 may be configured to apply the pretreatment liquid to the fabric 30. When the pretreatment liquid is applied by the inkjet method, an additional ejection head for pretreatment liquid may be provided on the carriage 12 of the recording apparatus 10.

(Pretreatment Liquid Fixation Step) In the pretreatment liquid fixation step, the control unit 20 dries the pretreatment liquid applied to the fabric 30, thereby fixing the pretreatment liquid to the recording surface of the fabric 30. The control unit 20 controls a drying device provided in the pretreatment liquid application device 22 to fix the pretreatment liquid to the recording surface of the fabric 30.

The method for drying the pretreatment liquid is not particularly limited. Examples of suitable drying methods may include a method of air drying, and a method of heating using various devices. Examples of commercially available devices for heating may include an iron, a heat press machine, a dryer, an oven, and a belt conveyor oven.

(Image Formation Step) In the image formation step, the control unit 20 ejects aqueous ink onto the recording surface of the transported fabric 30. By controlling the carriage 12 and piezoelectric elements or the like corresponding to each nozzle of the ejection head 13, the control unit 20 selectively ejects aqueous ink from each nozzle toward the fabric 30 passing beneath the ejection head 13. As a result, an image is formed on the recording surface of the fabric 30.

(Drying Step) In the drying step, when the fabric 30 is heated in the drying step, a crosslinking reaction occurs between binders due to the crosslinking agent, resulting in the formation of a robust resin coating film.

The heating temperature of the fabric 30 during the drying step is not particularly limited. The lower limit of the heating temperature may be 80 °C or higher, 100 °C or higher, 110 °C or higher, or 130 °C or higher. The upper limit of the heating temperature may be 200 °C or lower, 190 °C or lower, 185 °C or lower, or 180 °C or lower. The range of the heating temperature may be set by appropriately combining the above lower and upper limits. For example, the range of the heating temperature may be 80 °C or higher and 200 °C or lower, 100 °C or higher and 190 °C or lower, 110 °C or higher and 185 °C or lower, or 130 °C or higher and 180 °C or lower. From the perspective of forming a resin coating film by heat treatment, it may be preferable that the heating temperature is equal to or higher than the glass transition temperature of the urethane resin. From the perspective of dissociating the blocking agent and promoting the crosslinking reaction by heat treatment, it may be preferable that the heating temperature is equal to or higher than the dissociation temperature of the blocked isocyanate compound. From the perspective of melting the wax particles by heat treatment and distributing part of the wax particles so as to cover the surface of the resin coating film, it may be preferable that the heating temperature is equal to or higher than the melting point of the wax particles. The time for heating the same position of the fabric 30 during drying is not particularly limited, but may be within a range of 120 seconds to 600 seconds.

In the embodiment described above, the control unit 20 of the recording apparatus 10 controls the operation of the pretreatment liquid application device 22. However, a dedicated control unit for controlling the pretreatment liquid application device 22 may alternatively be included. Further, the pretreatment liquid fixation step may be omitted after the pretreatment step is performed, or both the pretreatment step and the pretreatment liquid fixation step may be omitted. That is, the image forming method disclosed in this specification may only need to include at least an image forming step and a drying step.

(Examples) Next, the aqueous ink disclosed in this specification will be described in detail through examples and comparative examples. However, the technology disclosed herein is not limited to these examples in any way. wt%

(Preparation of Aqueous Ink in Example 1) A total of 89.55 wt% of a water-soluble organic solvent and water was prepared. To this mixture of water-soluble organic solvent and water, TAKELAC W-6110 was added as a binder in an amount of 5.50 wt% on a solid content basis, SU-268A was added as a crosslinking agent in an amount of 1.20 wt% on a solid content basis, HITECH E-6314 was added as wax particles in an amount of 0.50 wt% on a solid content basis, and BYK-3420 was added as a surfactant in an amount of 0.25 wt%. Finally, a black pigment dispersion was added as a pigment in an amount of 3.00 wt% on a solid content basis and mixed. The resulting mixture was filtered through a cellulose acetate membrane filter having a pore size of 3.00 µm, from Toyo Roshi Kaisha, Ltd., thereby obtaining the aqueous ink of Example 1.

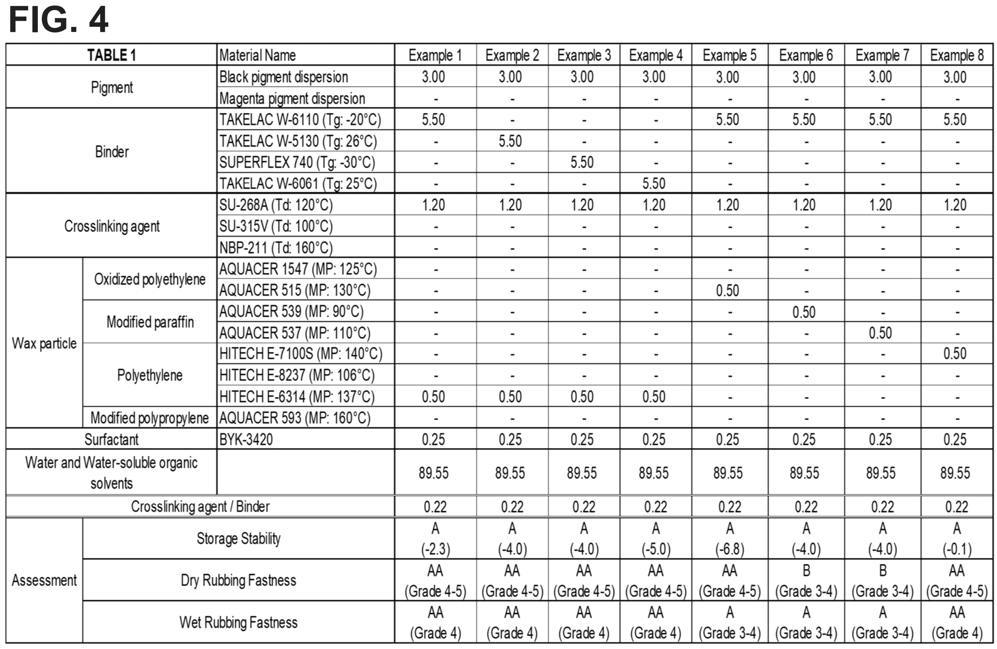

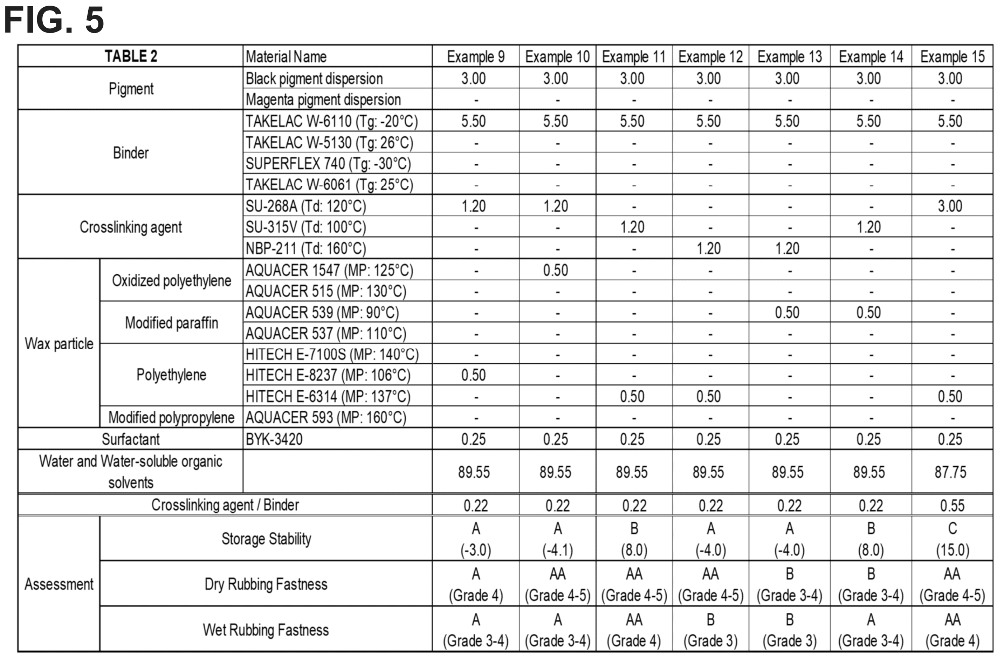

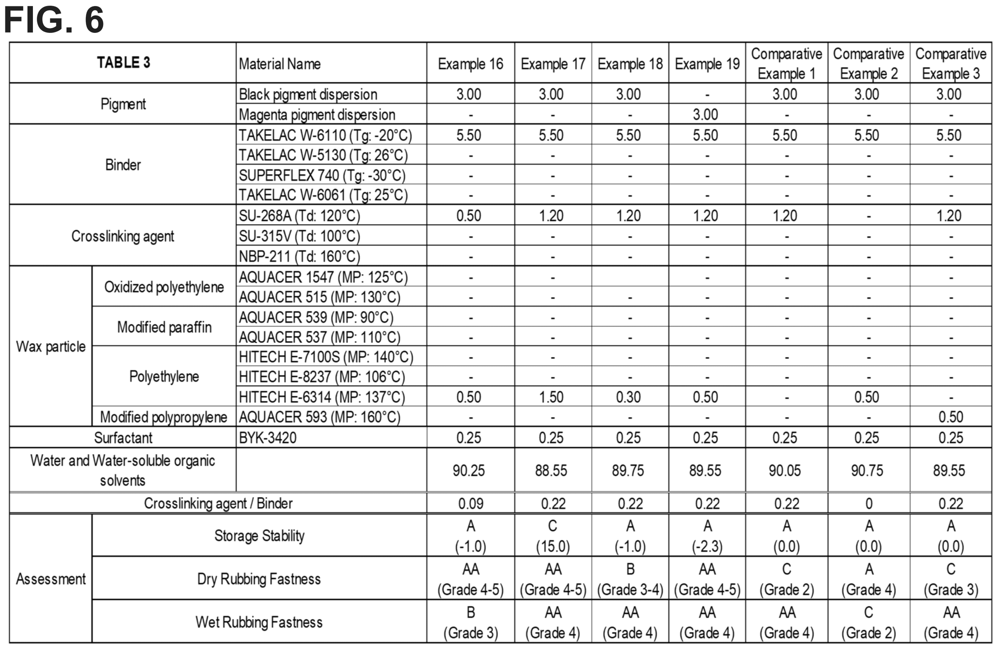

(Preparation of Aqueous Inks in Examples 2 to 19 and Comparative Examples 1 to 3) The aqueous inks in each example and comparative example were prepared using components specified in Tables 1 to 3 shown in FIGs. 4 to 6 and using the same procedure as in Example 1.

In Tables 1 to 3, the black pigment dispersion refers to an aqueous dispersion of carbon black, and the magenta pigment dispersion refers to an aqueous dispersion of C.I. Pigment Red 122. The amount of each component in the respective examples represents an amount of the solid content or active ingredient amount relative to the total amount of the aqueous ink.

(Preparation of Evaluation Samples) As a pretreatment step, a calcium nitrate aqueous solution, diluted to a calcium concentration of 0.30 wt%, was applied as a pretreatment liquid, at a coating amount of 80.00 g/m², to a white woven fabric made of 100 % cotton cut to a piece of 350 mm × 350 mm. The coated fabric was dried in an oven set at 120 °C for 3 minutes to obtain a pretreated fabric. The pretreated fabric was set in garment printer GTX^{®} pro from Brother Industries, Ltd. Using the aqueous inks prepared in each example and comparative example, the ink amount from the inkjet head was adjusted to 20 pL per pixel, and solid printing was performed at a resolution of 1200 dpi × 1200 dpi to form an image on the pretreated fabric. After image formation, the pretreated fabric was heated in an oven set at 160 °C for 5 minutes to obtain an evaluation sample.

Each example and comparative example was evaluated for ink storage stability, dry rubbing fastness, and wet rubbing fastness according to the methods described below.

(Evaluation of Ink Storage Stability) Each aqueous ink prepared in the examples was placed in a sealed container and stored for one week in a thermostatic chamber from ESPEC Corp., set at 60 °C. The viscosity before and after storage was measured at 25 °C using a TVE-25 viscometer from Toki Sangyo Co., Ltd. The rate of change in viscosity after storage, relative to the viscosity before storage, was calculated, and the storage stability of the aqueous ink was evaluated according to the following criteria. The evaluation results are shown in Tables 1 to 3.
A: Change rate less than 7.0 %
B: Change rate 7.0 % or greater and less than 15.0 %
C: Change rate 15.0 % or greater

(Evaluation of Dry Rubbing fastness) The evaluation samples from each sample were tested for dry rubbing fastness according to ISO 105-X12 standard test method to determine the dry rubbing fastness. The grade of dry rubbing fastness of the aqueous ink was evaluated based on the following criteria. The evaluation results and grades are shown in Tables 1 to 3.
AA: Grade 4 - 5 or higher
A: Grade 4
B: Grade 3 - 4
C: Grade 3 or lower

(Evaluation of Wet Rubbing fastness) The evaluation samples from each sample were tested for wet rubbing fastness according to ISO 105-X12 standard test method to determine the wet rubbing fastness. The grade of wet rubbing fastness of the aqueous ink was evaluated based on the following criteria. The evaluation results and grades are shown in Tables 1 to 3.
AA: Grade 4 or higher
A: Grade 3 - 4
B: Grade 3
C: Grade 2 - 3 or lower

As shown in Tables 1 to 3, Examples 1 to 19 yielded favorable results in all evaluation items. The aqueous inks of Examples 1 to 19 contained wax particles. Accordingly, during the process of forming the resin coating film, part of the wax particles was distributed so as to cover the surface of the resin coating film. Therefore, the surface lubricity of the resin coating film was improved, and high dry rubbing fastness could be achieved. On the other hand, during the heat treatment for forming the resin coating film, if the wax particles melt, there is a possibility that the crosslinking reaction between binders by the crosslinking agent may be inhibited. However, the melting point of the wax particles contained in the aqueous inks of each example was relatively high, in the range of 90 °C to 140 °C. Accordingly, in the heat treatment for forming the resin coating film, the timing at which the wax particles began to melt could be delayed. Thus, in the aqueous inks of each example, the wax particles began to melt after the crosslinking reaction progressed to some extent. In other words, the crosslinking reaction proceeded before the wax particles melted, resulting in a high coating film strength. As a result, high dry rubbing fastness and high wet rubbing fastness could be achieved.

In contrast, Comparative Example1 exhibited lower results in the evaluation of dry rubbing fastness, compared to Example 1. The aqueous ink of Comparative Example 1 had the same composition as the aqueous ink of Example 1 except that it did not contain wax particles. Since the aqueous ink of Comparative Example 1 did not include wax particles that cover the surface of the resin coating film, good abrasion resistance could not be imparted to the resin coating film. Accordingly, Comparative Example 1 exhibited low results in dry rubbing fastness.

In Comparative Example 2, the wet rubbing fastness was significantly lower than that of Example 1. The aqueous ink of Comparative Example 2 had the same composition as the aqueous ink of Example 1 except that it did not contain a crosslinking agent. Therefore, in Comparative Example 2, no crosslinked structure could be formed between binders, and sufficient coating film strength could not be obtained, resulting in low wet rubbing fastness.

In Comparative Example 3, the dry rubbing fastness was significantly lower than that of Example 1. The aqueous ink of Comparative Example 3 had the same composition as the aqueous ink of Example 1 except that it contained different wax particles. Specifically, the melting point of the wax particles AQUACER 593 contained in the aqueous ink of Comparative Example 3 was 160 °C, whereas the melting point of the wax particles HITECH E-6314 contained in the aqueous ink of Example 1 was 137 °C. In other words, the melting point of the wax particles in Comparative Example 3 was equivalent to the heating temperature 160 °C for preparing the evaluation sample, so the wax particles did not sufficiently melt and therefore did not distribute to cover the surface of the resin coating film. Consequently, it is considered that the dry rubbing fastness was low.

Next, a comparative review of the examples is provided. The aqueous inks of Examples 2 to 4 have the same composition as the aqueous ink of Example 1 except that they contain different binders, which are urethane resins. In Examples 2 to 4, all evaluations yielded results equivalent to those of Example 1. Therefore, it is considered that the technology disclosed herein is applicable to various aqueous inks containing urethane resins as binders.

The aqueous inks of Examples 5 to 10 have the same composition as the aqueous ink of Example 1 except that they contain different wax particles. The aqueous inks of Examples 1 and 5 to 10 contain wax particles having different melting points. Among Examples 1 and 5 to 10, Examples 6 and 7 exhibits inferior dry rubbing fastness. The wax particles contained in the aqueous inks of Examples 6 and 7 are modified paraffin waxes, which are a type of paraffin wax. In contrast, the wax particles contained in the aqueous inks of Examples 5 and 10 are oxidized polyethylene waxes. The wax particles contained in the aqueous inks of Examples 1, 8, and 9 are polyethylene waxes. It is confirmed that aqueous inks containing polyethylene wax, which has excellent abrasion resistance, exhibit better dry rubbing fastness.

Among Examples 1, 5, and 8 to 10, Example 9 exhibits slightly inferior dry rubbing fastness. The melting point of the polyethylene wax contained in the aqueous ink of Example 9 is the lowest among those contained in the aqueous inks of Examples 1, 5, and 8 to 10 and is lower than the heating temperature. During the heat treatment for forming the resin coating film, the wax particles melt and distribute so as to cover the surface of the resin coating film. The wax particles in the aqueous ink of Example 9 completely melt during heat treatment and therefore their particle shape do not remain on the surface of the resin coating film, resulting in slightly lower dry rubbing fastness. On the other hand, by melting the wax particles so that at least part of their particle shape remains rather than completely melting, dry rubbing fastness can be further improved. It is considered that, if the particle shape of the wax particles remains to some extent on the surface of the resin coating film, the wax particles are scraped off prior to other components when the surface of the resin coating film is rubbed. This suppresses direct frictional force acting on the binder. Therefore, by setting the melting point of the polyethylene wax to be relatively high so that the wax particles do not completely melt at the heating temperature, dry rubbing fastness can be further improved.

The melting points of the wax particles contained in the aqueous inks of Examples 1, 5, 8, and 10 are somewhat higher than the dissociation temperature of the blocked isocyanate compound. Specifically, the melting point of the wax particles is at least 5 °C higher than the dissociation temperature. If the melting point of the wax particles is lower than the dissociation temperature of the blocked isocyanate compound, the wax particles melt during heat treatment before the blocking agent actively dissociates. The melted wax particles can inhibit the crosslinking reaction, resulting in insufficient coating film strength. Therefore, it is considered that the aqueous inks of Examples 1, 5, 8, and 10, in which the melting point of the wax particles is somewhat higher than the dissociation temperature of the blocked isocyanate compound, exhibit favorable wet rubbing fastness. It may be preferable that the crosslinking reaction begins after the formation of the coating film by the binder has begun, because the crosslinked structure is formed between binders by the crosslinking agent. Accordingly, by setting the dissociation temperature of the blocked isocyanate compound higher than the glass transition temperature of the urethane resin serving as the binder, further improvement in coating film strength can be achieved.

Furthermore, among Examples 1, 5, 8, and 10, Examples 1 and 8 exhibits superior wet rubbing fastness. Although the melting points of the wax particles contained in the aqueous inks of Examples 5 and 10 are higher than the dissociation temperature of the blocked isocyanate compound, the difference is relatively small. In contrast, the melting points of the wax particles contained in the aqueous inks of Examples 1 and 8 are at least 15 °C higher than the dissociation temperature of the blocked isocyanate compound. If the melting point of the wax particles is close to the dissociation temperature of the blocked isocyanate compound, the timing of wax particle melting during heat treatment may overlap with the timing of active dissociation of the blocking agent. The melted wax particles can inhibit the crosslinking reaction, resulting in insufficient coating film strength. When the melting point of the wax particles is at least 15 °C higher than the dissociation temperature of the blocked isocyanate compound, the wax particles begin to melt after the crosslinking reaction has progressed, which may result in further improving wet rubbing fastness.

The aqueous inks of Examples 11 and 12 have the same composition as the aqueous ink of Example 1 except that they contain different crosslinking agents. In other words, the aqueous inks of Examples 1, 11, and 12 contain blocked isocyanate compounds having different dissociation temperatures. As shown in Tables 1 to 3, the closer the dissociation temperature of the blocked isocyanate compound is to the heating temperature during preparation of the evaluation sample, the more likely the wet rubbing fastness decreases. For example, in Example 12, the wet rubbing fastness is inferior compared to Examples 1 and 11. The dissociation temperature of the blocked isocyanate compound in Example 12 is 160 °C, which is the highest among Examples 1, 11, and 12 and is equivalent to the heating temperature of 160 °C. If the dissociation temperature of the blocked isocyanate compound is equal to or close to the heating temperature, the blocking agent bonded to the isocyanate group does not sufficiently dissociate during heat treatment, and the crosslinking reaction may be difficult to proceed. As a result, sufficient coating film strength cannot be obtained, and wet rubbing fastness may decrease. Therefore, aqueous inks containing a blocked isocyanate compound having a dissociation temperature lower than the heating temperature are considered to exhibit better wet rubbing fastness.

On the other hand, it is confirmed from Examples 1, 11, and 12 that the lower the dissociation temperature of the blocked isocyanate compound, the more likely the storage stability of the aqueous ink decreases. In particular, in Example 11, the storage stability of the aqueous ink is inferior compared to Examples 1 and 12. The dissociation temperature of the blocked isocyanate compound contained in the aqueous ink of Example 11 is the lowest among those contained in the aqueous inks of Examples 1, 11, and 12. The lower the dissociation temperature, the more likely the blocking agent dissociates from the isocyanate group during storage of the aqueous ink, causing the crosslinking reaction to proceed unintentionally. Thus, the viscosity of the aqueous ink increases, and the storage stability of the aqueous ink decreases. Therefore, by setting the dissociation temperature of the blocked isocyanate compound to a relatively high level, better storage stability of the aqueous ink can be achieved.

Results attributable to the relationship between the melting point of the wax particles and the dissociation temperature of the blocked isocyanate compound are also confirmed in Examples 1, 11, and 12. Specifically, the melting point of the wax particles contained in the aqueous ink of Example 12 is lower than the dissociation temperature of the blocked isocyanate compound. In contrast, the melting points of the wax particles contained in the aqueous inks of Examples 1 and 11 are at least 15 °C higher than the dissociation temperature of the blocked isocyanate compound. Consequently, in Example 12, the wet rubbing fastness is inferior compared to Examples 1 and 11. Thus, in Examples 1, 11, and 12, it is confirmed that when the melting point of the wax particles is at least 15 °C higher than the dissociation temperature, favorable wet rubbing fastness can be obtained.

The aqueous ink of Example 13 has the same composition as that of Example 12 except that it contains different wax particles. The wax particles contained in the aqueous ink of Example 13 are modified paraffin wax, which is a type of paraffin wax. In contrast, the wax particles contained in the aqueous ink of Example 12 are polyethylene wax. Example 13 exhibits inferior dry rubbing fastness compared to Example 12. In other words, it is confirmed that aqueous inks containing polyethylene wax exhibit better dry rubbing fastness. This tendency is also confirmed from Examples 1, 5 to 11, and 14, where aqueous inks containing polyethylene wax exhibit better dry rubbing fastness.

The aqueous inks of Examples 15 and 16 have the same composition as that of Example 1 except that they differ in the amount of crosslinking agent. In other words, the aqueous inks of Examples 1, 15, and 16 differ in the ratio of the amount of crosslinking agent to the amount of binder. The aqueous ink of Example 15, in which the ratio is 0.55, exhibits inferior storage stability. The blocked isocyanate compound may slightly dissociate during storage of the aqueous ink. Therefore, the greater the amount of crosslinking agent, the greater the amount of blocking agent that dissociates, making the crosslinking reaction more likely to proceed and increasing the viscosity of the aqueous ink. Accordingly, aqueous inks in which the ratio is relatively small can achieve better storage stability.

On the other hand, in Example 16, in which the ratio is 0.09, the wet rubbing fastness was inferior. Generally, as the amount of crosslinking agent increases, more crosslinked structures are formed by heat treatment. Therefore, the smaller the amount of crosslinking agent, the fewer crosslinked structures are formed by heat treatment, making it difficult to obtain sufficient coating film strength. Accordingly, aqueous inks in which the ratio is relatively large are considered to achieve better wet rubbing fastness.

The aqueous inks of Examples 17 and 18 have the same composition as that of Example 1 except that they differ in the amount of wax particles. In other words, the aqueous inks of Examples 1, 17, and 18 differ in the amount of wax particles relative to the total amount of the aqueous ink. The aqueous ink of Example 17, in which the amount is 1.50 wt%, exhibits inferior storage stability. Generally, wax particles tend to increase the viscosity of the aqueous ink. Therefore, the greater the amount of wax particles relative to the total amount of the aqueous ink, the greater the increase in viscosity. Accordingly, aqueous inks in which the amount of wax particles is relatively small can achieve better storage stability.

On the other hand, in Example 18, in which the amount is 0.30 wt%, the dry rubbing fastness is inferior. Generally, when wax particles are on the surface of the resin coating film, the surface lubricity of the resin coating film improves. Therefore, the less the amount of wax particles, the less effective the improvement in lubricity by the wax particles. Accordingly, aqueous inks containing a certain amount of wax particles can achieve better dry rubbing fastness.

The aqueous ink of Example 19 has the same composition as the aqueous ink of Example 1 except that it contains a different pigment. In Example 19, the results of all evaluations are the same as those of Example 1. Therefore, it is considered that the technology disclosed in this specification is applicable to aqueous inks containing various pigments.

From these results, it is found that an aqueous ink containing a urethane resin as a binder and a blocked isocyanate compound as a crosslinking agent can exhibit high rubbing fastness by appropriately setting the melting point of the wax particles to 90 °C or higher and 140 °C or lower.

The specific examples have been described in detail above; however, these are merely illustrative and do not limit the scope of the claims. The technical scope described in the claims shall include various modifications and alterations of the specific examples illustrated above.

The technical elements described in this specification or the drawings may exhibit technical usefulness either individually or in various combinations, and are not limited to the combinations described in the claims at the time of filing. Furthermore, the technologies illustrated in this specification or drawings may achieve multiple objectives simultaneously, and achieving even one of these objectives may provide technical usefulness.

Even if each claim in the claims at the time of filing is dependent only on certain other claims, such dependency does not limit the claims to being dependent only on those specific claims. Within a technically consistent scope, each claim may be dependent on other claims not originally dependent upon. That is, the technologies of the respective claims may be combined in various ways as described below.

(Item 1) An aqueous ink for inkjet recording used to form an image on a fabric, comprising a pigment, a binder, a crosslinking agent, and a wax particle, wherein the binder comprises a urethane resin, the crosslinking agent comprises a blocked isocyanate compound, and a melting point of the wax particle is 90 °C or higher and 140 °C or lower.

(Item 2) The aqueous ink for inkjet recording according to Item 1, wherein a dissociation temperature of the blocked isocyanate compound is 130 °C or lower.

(Item 3) The aqueous ink for inkjet recording according to Item 1 or 2, wherein a dissociation temperature of the blocked isocyanate compound is 120 °C or higher.

(Item 4) The aqueous ink for inkjet recording according to any one of Items 1 to 3, wherein the wax particles include at least one selected from the group consisting of polyethylene wax and oxidized polyethylene wax.

(Item 5) The aqueous ink for inkjet recording according to Item 4, wherein a melting point of the wax particles is 125 °C or higher.

(Item 6) The aqueous ink for inkjet recording according to any one of Items 1 to 5, wherein a dissociation temperature of the blocked isocyanate compound is higher than a glass transition temperature of the urethane resin, and a melting point of the wax particles is at least 5 °C higher than a dissociation temperature of the blocked isocyanate compound.

(Item 7) The aqueous ink for inkjet recording according to Item 6, wherein the melting point of the wax particles is at least 15 °C higher than the dissociation temperature of the blocked isocyanate compound.

(Item 8) The aqueous ink for inkjet recording according to any one of Items 1 to 7, wherein an amount of the wax particles relative to the total amount of the aqueous ink for inkjet recording is 1.00 wt% or less.

(Item 9) The aqueous ink for inkjet recording according to any one of Items 1 to 8, wherein an amount of the wax particles relative to the total amount of the aqueous ink for inkjet recording is 0.50 wt% or greater.

(Item 10) The aqueous ink for inkjet recording according to any one of Items 1 to 9, wherein a ratio of an amount of the crosslinking agent to an amount of the binder is 0.50 or less.

(Item 11) The aqueous ink for inkjet recording according to any one of Item 1 to 10, wherein a ratio of an amount of the crosslinking agent to an amount of the binder is 0.10 or greater.

(Item 12) An ink set comprising the aqueous ink for inkjet recording according to any one of claims 1 to 11 and a pretreatment liquid applied to the fabric before forming an image on the fabric using the aqueous ink for inkjet recording.

(Item 13) An inkjet recording apparatus comprising an ink storage section, an ink ejection unit, and an aqueous ink for inkjet recording stored in the ink storage section, wherein the ink ejection unit is configured to eject the aqueous ink for inkjet recording to form an image on a fabric, and the aqueous ink for inkjet recording comprises a pigment, a binder, a crosslinking agent, and a wax particle, wherein the binder comprises a urethane resin, the crosslinking agent comprises a blocked isocyanate compound, and a melting point of the wax particle is 90 °C or higher and 140 °C or lower.

(Item 14) An image forming method for forming an image on a fabric by an inkjet recording method, comprising an image forming step of forming an image on the fabric using an aqueous ink for inkjet recording, and a drying step of drying the aqueous ink for inkjet recording by heating the fabric on which the image has been formed, wherein the aqueous ink for inkjet recording comprises a pigment, a binder, a crosslinking agent, and a wax particle, wherein the binder comprises a urethane resin, the crosslinking agent comprises a blocked isocyanate compound, and a melting point of the wax particle is 90 °C or higher and 140 °C or lower.

(Item 15) The image forming method according to Item 14, wherein a heating temperature in the drying step is 160 °C or higher.

(Item 16) The image forming method according to Item 14 or 15, further comprising a pretreatment step of applying a pretreatment liquid to the fabric before the image forming step, wherein the pretreatment liquid is applied within an area where the image is to be formed by the aqueous ink for inkjet recording.

While the invention has been described in conjunction with various example structures outlined above and illustrated in the figures, various alternatives, modifications, variations, improvements, and/or substantial equivalents, whether known or that may be presently unforeseen, may become apparent to those having at least ordinary skill in the art. Accordingly, the example embodiments of the disclosure, as set forth above, are intended to be illustrative of the invention, and not limiting the invention. Various changes may be made without departing from the spirit and scope of the disclosure. Therefore, the disclosure is intended to embrace all known or later developed alternatives, modifications, variations, improvements, and/or substantial equivalents.

## Claims

1. An aqueous ink for inkjet recording used to form an image on a fabric, comprising:
a pigment, a binder, a crosslinking agent, and wax particles, wherein
the binder comprises a urethane resin,
the crosslinking agent comprises a blocked isocyanate compound, and
a melting point of the wax particles is 90 °C or higher and 140 °C or lower.

2. The aqueous ink for inkjet recording according to claim 1, wherein a dissociation temperature of the blocked isocyanate compound is 130 °C or lower, more particular 120 °C or higher and 130 °C or lower.

3. The aqueous ink for inkjet recording according to claim 1 or 2, wherein the wax particles include at least one selected from the group consisting of polyethylene wax and oxidized polyethylene wax.

4. The aqueous ink for inkjet recording according to claim 3, wherein a melting point of the wax particles is 125 °C or higher.

5. The aqueous ink for inkjet recording according to any one of claims 1 to 4, wherein
a dissociation temperature of the blocked isocyanate compound is higher than the glass transition temperature of the urethane resin, and
a melting point of the wax particles is at least 5 °C higher than the dissociation temperature of the blocked isocyanate compound.

6. The aqueous ink for inkjet recording according to claim 5, wherein the melting point of the wax particles is at least 15 °C higher than the dissociation temperature of the blocked isocyanate compound.

7. The aqueous ink for inkjet recording according to any one of claims 1 to 6, wherein an amount of the wax particles relative to the total amount of the aqueous ink for inkjet recording is 1.00 wt% or less.

8. The aqueous ink for inkjet recording according to any one of claims 1 to 7, wherein an amount of the wax particles relative to the total amount of the aqueous ink for inkjet recording is 0.50 wt% or greater.

9. The aqueous ink for inkjet recording according to any one of claims 1 to 8, wherein a ratio of an amount of the crosslinking agent to an amount of the binder is 0.50 or less.

10. The aqueous ink for inkjet recording according to any one of claims 1 to 9, wherein a ratio of an amount of the crosslinking agent to an amount of the binder is 0.10 or greater.

11. An ink set comprising:
the aqueous ink for inkjet recording according to any one of claims 1 to 10; and
a pretreatment liquid applied to the fabric before forming an image on the fabric using the aqueous ink for inkjet recording.

12. An inkjet recording apparatus comprising:
an ink storage section, an ink ejection unit, and an aqueous ink for inkjet recording stored in the ink storage section,
wherein
the ink ejection unit is configured to eject the aqueous ink for inkjet recording to form an image on a fabric, and
the aqueous ink for inkjet recording comprises:
a pigment, a binder, a crosslinking agent, and wax particles, wherein
the binder comprises a urethane resin,
the crosslinking agent comprises a blocked isocyanate compound, and
a melting point of the wax particles is 90 °C or higher and 140 °C or lower.

13. An image forming method for forming an image on a fabric by an inkjet recording method, comprising:
an image forming step of forming an image on the fabric using an aqueous ink for inkjet recording, and
a drying step of drying the aqueous ink for inkjet recording by heating the fabric on which the image has been formed,
wherein the aqueous ink for inkjet recording comprises:
a pigment, a binder, a crosslinking agent, and wax particles, wherein
the binder comprises a urethane resin,
the crosslinking agent comprises a blocked isocyanate compound, and
a melting point of the wax particles is 90 °C or higher and 140 °C or lower.

14. The image forming method according to claim 13, wherein a heating temperature in the drying step is 160 °C or higher.

15. The image forming method according to claim 13 or 14, further comprising:
a pretreatment step of applying a pretreatment liquid to the fabric before the image forming step,
wherein the pretreatment liquid is applied within an area where the image is to be formed by the aqueous ink for inkjet recording.
